# EUROPÄISCHE PATENTSCHRIFT

(11) **EP 0 772 811 B1**
(45) Veröffentlichungstag und Bekanntmachung des Hinweises auf die Patenterteilung: **17.06.1998**
(21) Anmeldenummer: 95925702.3
(22) Anmeldetag: 18.07.1995
(51) Int. Cl.: G06F 7/00

(54) **DEFUZZIFIKATIONS-VORRICHTUNG FÜR EINEN HOCHAUFLÖSENDEN FUZZY-LOGIC-CONTROLLER**
DEFUZZIFIER FOR HIGH-RESOLUTION FUZZY LOGIC CONTROLLER
FILTRE ANTI-FLOU POUR UNITE DE COMMANDE A LOGIQUE FLOUE DE HAUTE RESOLUTION

(30) Priorität: 29.07.1994 DE 4427020
(43) Veröffentlichungstag der Anmeldung: 14.05.1997
(73) Patentinhaber: SIEMENS AKTIENGESELLSCHAFT, 80333 München (DE)
(72) Erfinder: EICHFELD, Herbert, D-80538 München (DE)
(86) Internationale Anmeldenummer: DE9500946
(87) Internationale Veröffentlichungsnummer: WO9604601

(56) Entgegenhaltungen:
- EP-A- 0 573 845
- PROCEEDINGS OF THE INTERNATIONAL CONFERENCE ON FUZZY SYSTEMS, SAN FRANCISCO, MAR. 28 - APR. 1, 1993, Bd. 2, 28.März 1993 INSTITUTE OF ELECTRICAL AND ELECTRONICS ENGINEERS, Seiten 1365-1370, XP 000371598 HELLENDOORN H 'DESIGN AND DEVELOPMENT OF FUZZY SYSTEMS AT SIEMENS R&D'

## Beschreibung

Bei Fuzzy-Logic-Controllern mit einer Auflösung großer 8 Bit ist es zweckmäßig, die Zugehörigkeitsfunktionen von linguistischen Variablen in Form von Maßzahlen, die diese Zugehörigkeitsfunktionen charakterisieren, zu speichern und zu verarbeiten. Somit werden auch Defuzzifizierungs-Vorrichtungen benötigt, die aus in einer Inferenzeinheit gebildeten aggregierten Regelgewichten und aus Maßzahlen für die Zugehörigkeitsfunktionen der linguistischen Ausgangsvariablen einen scharfen Ausgangswert bilden. Da es mehrere unterschiedliche Defuzzifikationsverfahren gibt und zumindest die wichtigsten dieser Verfahren wahlweise möglich sein sollen, um möglichst optimale Regelungs/Klassifizierungsergebnisse erzielen zu können, führt dies zu einem entsprechend hohen Chipflachenbedarf.

EP-A-0 573 845 beschreibt eine Defuzzifikations-Vorrichtung für einen Fuzzy-Logic-Controller, der Zugehörigkeitsfunktionen in Form von Maßzahlen verarbeitet, bei der abhängig von Auswahlsignalen und aggregierten Regelgewichten, entweder in einem Maximumverfahren ein mittlerer Höhenwert der zu defuzzifizierenden unscharfen Vereinigungsmenge, bei dem ein zugehöriges aggregiertes Regelgewicht maximal ist, als scharfer Ausgangswert ausgewählt wird, oder alternativ abhängig von Auswahlsignalen in einem Schwerpunktsverfahren aus Schwerpunktskoordinaten und aggregierten Regelgewichten von Zugehörigkeitsfunktionen ein scharfer Ausgangswert gebildet wird.

Die der Erfindung zugrundeliegende Aufgabe liegt nun darin, eine möglichst schnelle Defuzzifikations-Vorrichtung mit möglichst geringer Chipflache anzugeben, mit der die wichtigsten Defuzzifikationsverfahren durchführbar sind.

Diese Aufgabe wird erfindungsgemäß durch die im Patentanspruch 1 angegebenen Merkmale gelöst.

Die Ansprüche 2 bis 4 sind auf bevorzugte Ausbildungen der erfindungsgemäßen Vorrichtung gerichtet, wobei bei der Ausbildung nach Anspruch 4 dadurch Rechenzeit gespart wird, daß keine Multiplikation erfolgt, wenn die jeweilige Flächenmaßzahl gleich Null oder gleich Eins ist.

Die Erfindung wird nachfolgend anhand der Zeichnungen naher erläutert. Dabei zeigt
- Figur 1: ein Blockschaltbild eines hochauflösenden Fuzzy-Logic-Controllers mit einer erfindungsgemäßen Defuzzifikations-Vorrichtung,
- Figur 2: ein Schaltbild einer erfindungsgemäßen Defuzzifikations-Vorrichtung,
- Figur 3A: ein erster Teil eines Ablaufdiagramms zu Erläuterung der Steuersignale einer erfindungsgemäßen Defuzzifikations-Vorrichtung,
- Figur 3B: ein zweiter Teil eines Ablaufdiagramms zur Erläuterung der Steuersignale einer erfindungsgemäßen Defuzzifikations-Vorrichtung,
- Figur 4: eine Darstellung zur Erläuterung der Belegung des Wissensbasisspeichers abhängig vom gewählten Defuzzifikations-Verfahren,
- Figur 5: eine Teilschaltung des Wissensbasisspeicher-Interface zur Erläuterung der Bedeutung des bei einer Defuzzifikation nach dem Maximumverfahren auftretenden Steuersignals.

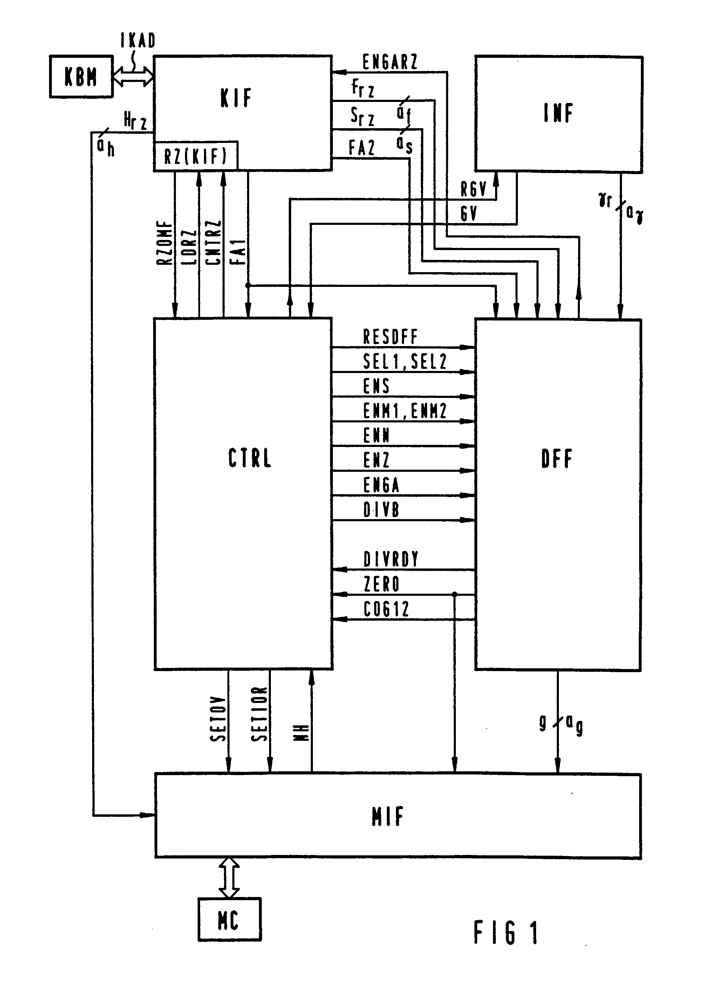

In Figur 1 ist ein Blockschaltbild eines hochauflösenden Fuzzy-Logic-Controllers, bestehend aus einer erfindungsgemäßen Defuzzifikations-Vorrichtung DFF, einer Steuereinheit CTRL, einer Inferenzeinheit INF, einem Wissensbasisspeicher-Interface KIF zu einem Wissensbasisspeicher KBM und ein Mikrocontroller-Interface MIF zu einem Mikrocontroller MC dargestellt. Die erfindungsgemäße Defuzzifikations-Vorrichtung DFF erhält dabei von der Steuereinheit CTRL eine Reihe von Steuersignalen RESDFF, SEL1, SEL2, ENS, ENM1, ENM2, ENN, ENZ, ENGA und DIVB und liefert an die Steuereinheit CTRL die Steuersignale DIVRDY, ZERO und COG12. Über das Wissensbäsisspeicher-Interface KIF sind Höhenwerte H_{rz}, Flächenmaßzahlen F_{rz}, Schwerpunktskoordinaten S_{rz} sowie Signale FA1 und FA2 zur Festlegung des Defuzzifikations-Verfahrens aus dem Wissensbasisspeicher KBM über einen Bus IKAD auslesbar, wobei die Höhenwerte H_{rz} direkt in das Mikrocontroller-Interface Interface MIF, die Flächenmaßzahlen F_{rz} und die Schwerpunktskoordinaten S_{rz} in die erfindungsgemäße Defuzzifikations-Vorrichtung DFF, das Auswahlsignal FA1 in die Steuereinheit CTRL und die Defuzzifikations-Vorrichtung DFF und das Auswahlsignal FA2 in die Defuzzifikations-Vorrichtung DFF eingelesen werden. Das Wissensbasisspeicher-Interface KIF enthält einen Rückwärtszähler Rz(KIF), der durch ein Ladesignal LDRZ aus der Steuereinheit CTRL mit einem Anfangswert ladbar ist und durch Zählimpulse CNTRZ aus der Steuereinheit CTRL dekrementiert wird. Ist der Wert des Rückwärtszählers RZ(KIF) gleich Null, so wird dies der Steuereinheit CTRL durch ein Signal RZOMF aus dem Wissensbasisspeicher-Interface angezeigt. Die Steuereinheit CTRL fordert die Inferenzeinheit INF über ein Anfragesignal RGV auf, ein aggregiertes Regelgewicht γ_{ν} an die Defuzzifikations-Vorrichtung DFF zu senden. Sobald ein neues aggregiertes Regelgewicht γ_{ν} verfügbar ist, meldet dies die Inferenzeinheit über ein Signal GV der Steuereinheit CTRL. Das Mikrocontroller-Interface MIF erhält von der Steuereinheit CTRL ein Anfragesignal SETIOR und ein Signal SETOV zur Meldung gültiger Ausgangsdaten und erhält von dieser ein Signal NH (no hit) zur Feststellung, ob mindestens ein aggregiertes Regelgewicht ungleich Null ist. Neben den in der Defuzzifikations-Vorrichtung DFF gebildeten scharfen Ausgangswerten g wird auch das Steuersignal ZERO an das Mikrocontroller-Interface MIF geliefert. Ferner wird in der erfindungsgemäßen Defuzzifikations-Vorrichtung DFF ein Aktivierungssignal ENGARZ für das Wissensbasisspeicher-Interface KIF gebildet.

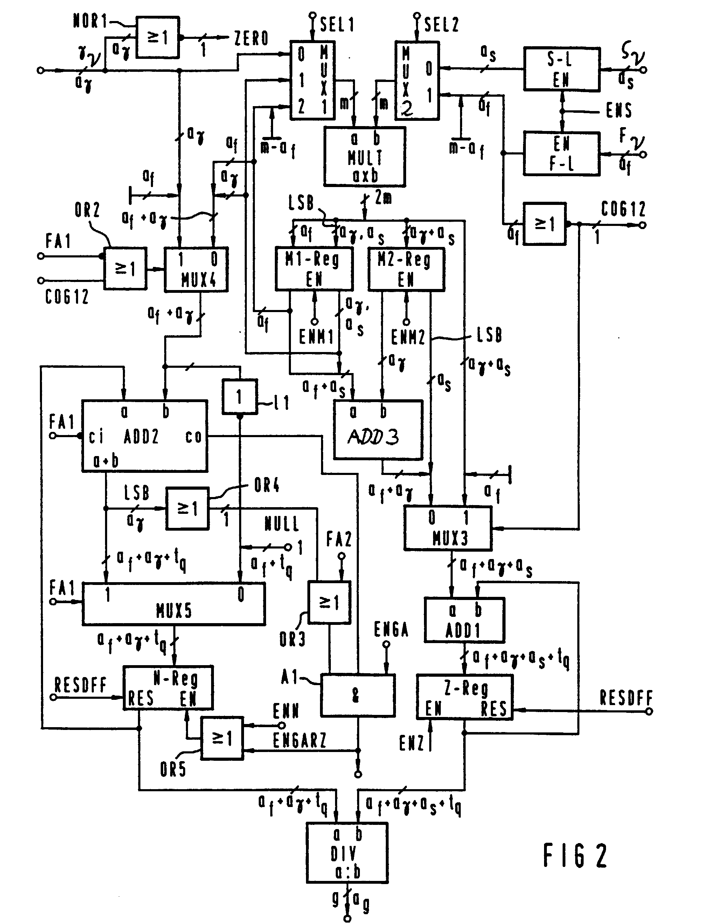

Figur 2 zeigt ein Schaltbild einer erfindungsgemäßen Defuzzifikations-Vorrichtung DFF, bei der aggregierte Regelgewichte γ_{ν} mit der Wortbreite ay Eingängen einer NOR-Schaltung NOR1, einem Nulleingang eines Multiplexers MUX1, der eine Wortbreite m aufweist, und einem Eins-Eingang eines Multiplexers MUX4, der eine Wortbreite a_{f} + a_{γ} aufweist, zugeführt sind, wobei beim Multiplexer MUX4 die a_{f} führenden Stellen fest auf logisch Null liegen. Das vorher invertierte Auswahlsignal FA1 wird mit einem Auswahlsignal COG12 in einer ODER-Schaltung OR2 zu einem Auswahlsignal SEL4 für den Multiplexer MUX4 ODER-verknüpft. Das Auswahlsignal COG12 wird dabei in der Defuzzifikations-Vorrichtung DFF aus den a_{f} Bits der Flachenmaßzahl F_{ν} mit Hilfe einer NOR-Schaltung NOR2 gebildet, wobei dieses Signal gleichzeitig zur Ansteuerung eines Multiplexers MUX3 dient. Ein b-Eingang eines Multiplizierers MULT ist mit einem m Bit breiten Ausgang eines Multiplexers MUX2 verbunden und erhält, abhängig vom Steuersignal SEL2, entweder das a_{S} Bit breite Ausgangssignal eines Haltegliedes S-L für die Schwerpunktswerte S_{ν} oder ein a_{f} Bit breites Ausgangssignal eines Haltegliedes F-L für die Flachenmaßzahlen F_{ν}, wobei beide Halteglieder durch ein Aktivierungssignal ENS ansteuerbar sind. Der Ausgang des Multiplizierers MULT weist eine Wortbreite von 2m auf und liefert Eingangswerte für ein Register Ml-Reg und ein Register M2-Reg, wobei das Register Ml-Reg a_{f} höherwertige Bits und a_{γ} bzw. a_{S} niedrigwertige Bits LSB aufnimmt und das Register M2-Reg die Wortbreite a_{γ} + a_{S} aufweist und diese Register über Aktivierungssignale ENM1 bzw. ENM2 ansteuerbar sind. Das Ausgangssignal des Multiplizierers MULT ist ferner einem Eins-Eingang des Multiplexers MUX3 zugeführt, wobei a_{f} Bits der gesamten Wortbreite a_{f} + a_{γ} + a_{S} des Multiplexers MUX3 dauerhaft eine logische Null erhalten. Die höherwertigen a_{f} Bits des Registers Ml-Reg sind auf einen Zwei-Eingang des Multiplexers MUX1 rückgeführt und bilden a_{f} Bits des Null-Eingangs des Multiplexers MUX4. Die niedrigwertigen a_{γ} bzw. a_{S} Bits am Ausgang des Registers Ml-Reg werden auf einen Eins-Eingang des Multiplexers MUX1 rückgeführt und bilden die restlichen a_{γ} Bits am Null-Eingang des Multiplexers MUX4. Der a-Eingang des Multiplizierers MULT ist abhängig vom Auswahlsignal SEL1 entweder auf den Null-Eingang, den Eins-Eingang oder den Zwei-Eingang des Multiplexers MUX1 durchschaltbar. Alle Ausgänge des Registers Ml-Reg sind mit einem a-Eingang des Addierers ADD3 verbunden, dessen b-Eingang mit den a_{γ} höherwertigen Bits des Registers M2-Reg verbunden ist und dessen Ausgang a_{f} + a_{γ} Bit breit mit dem Null-Eingang des Multiplexers MUX3 verbunden ist. Die a_{S} niedrigwertigen Bits des Registers M2-Reg sind mit den restlichen Bitleitungen des Null-Eingangs verbunden. Der Ausgang des Multiplexers MUX3 stellt gleichzeitig den a-Eingang eines Addierers ADD1 dar, dessen Ausgang mit dem Eingang eines Zählerregisters Z-Reg beschaltet ist. Das Zählerregister Z-Reg ist durch ein Aktivierungssignal ENZ und ein Rücksetzsignal RESDFF ansteuerbar und der Ausgang dieses Registers ist zum einen auf einen b-Eingang des Addierers ADD1 rückgeführt und zum anderen stellt es den Zähler-Eingang des Dividierers DIV dar, dessen Ausgang die scharfen Ausgangswerte g mit der Auflösung ag liefert. Der a_{f} + a_{γ} Bit breite Ausgang des Multiplexers MUX4 ist mit den Bitleitungen eines b-Eingangs eines Addierers ADD2 verbunden, dessen invertierender Übertragseingang Ci mit dem Auswahlsignal FA1 beschaltet ist, dessen Übertragsausgang CO mit einem Eingang einer UND-Schaltung Al verbunden ist und dessen Summenausgang mit einem a_{f} + a_{γ} + t_{q} Bit breiten Eins-Eingang eines Multiplexers MUX5 verbunden ist, wobei die Trefferquote tq die kleinste natürliche Zahl ist, die größer als der Logarithmus zur Basis 2 aus der Anzahl der getroffenen Funktionen ist. Der Null-Eingang des Multiplexers MUX5 erhält dabei durch einen Inverter I1 invertierte a_{γ} Bits des Multiplexerausgangs MUX4 und a_{f} + t_{q} Bitleitungen sind dauerhaft auf logisch Eins gelegt. Der Multiplexer MUX5 ist durch das Auswahlsignal FA1 umschaltbar und sein a_{f} + a_{γ} + t_{q} Bit breiter Ausgang ist mit dem Eingang des Nenner-Registers N-Reg beschaltet, dessen Ausgang zum einen mit dem a-Eingang des Addierers ADD2 verbunden ist und zum anderen mit dem Nenner-Eingang des Dividierers DIV beschaltet ist. Die a_{γ} niedrigwertigsten Bits LSB des Ausgangs von Addierer ADD2 werden durch eine ODER-Schaltung OR4 bitweise ODER-verknüpft und der Ausgang der ODER-Schaltung OR4 ist mit einem Eingang einer weiteren ODER-Schaltung OR3 beschaltet, die einen weiteren Eingang aufweist, der das Auswahlsignal FA2 erhält und deren Ausgang mit einem Eingang der UND-Schaltung Al verbunden ist. Ein dritter Eingang der UND-Schaltung Al erhält das Aktivierungssignal ENGA und am Ausgang der UND-Schaltung Al liegt das Aktivierungssignal ENGARZ für das Wissensbasisspeicher-Interface KIF an. Dieses Signal wird in einer weiteren ODER-Schaltung OR5 mit dem Aktivierungssignal ENN ODER-verknüpft und dient zur Aktivierung des Nenner-Registers N-Reg, das durch das Rücksetzsignal RESDFF rücksetzbar ist.

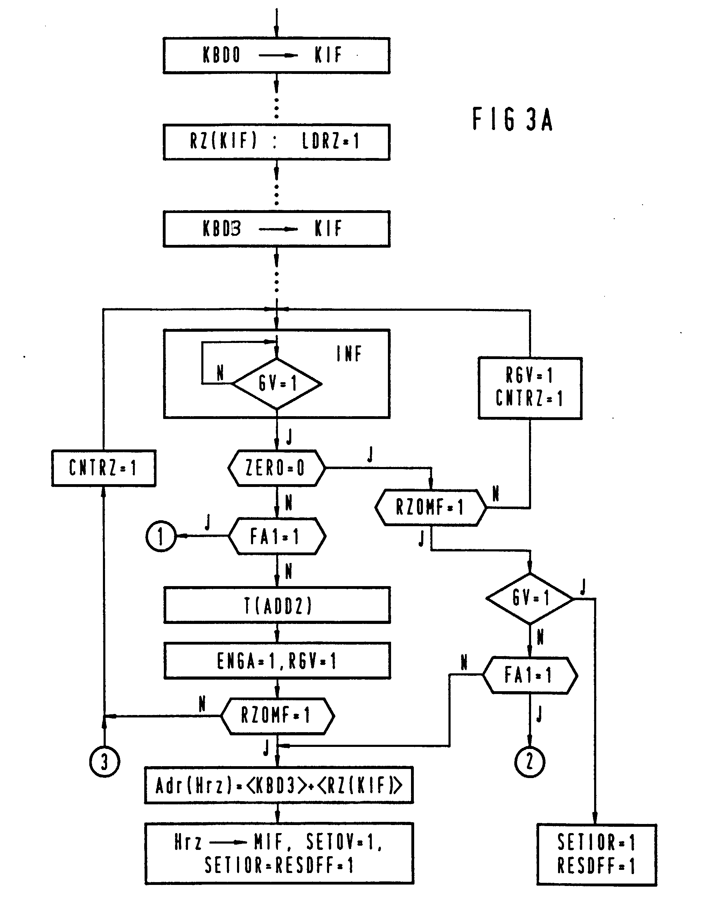

In Figur 3A ist ein erster Teil eines Ablaufprogramms zur Erlauterung der Steuersignale dargestellt. Zunächst wird hierbei ein nulltes Wissensbasisdeskriptorwort KBD0 in das Wissensbasisspeicher-Interface KIF eingelesen und der Rückwärtszähler RZ(KIF) im Wissensbasisspeicher-Interface KIF mit der Anzahl nl der Ausgangszugehörigkeitsfunktionen geladen, sofern das Ladesignal LDRZ gleich Eins ist. Daraufhin wird ein drittes Wissensbasisdeskriptorwort KBD3 in das Wissensbasisspeicher-Interface KIF geladen, das die Startadresse des Ausgangszugehörigkeitsfunktionsblocks OMF darstellt. Wobei, wie später noch näher erläutert, der Ausgangszugehörigkeitsfunktionsblock je nach Defuzzifikationsverfahren mit die jeweiligen Zugehörigkeitsfunktionen charakterisierenden Maßzahlen geladen ist und einen Teil der Wissensbasis KBM darstellt. Nun erfolgt eine Inferenzbildung INF, die der Steuereinheit durch das Signal GV = 0 signalisiert wird. Ist die Inferenzbildung beendet, also das Signal GV gleich Eins, wird aus den aggregierten Regelgewichten γ_{ν} das Signal ZERO gebildet. Ist das jeweilige adressierte Regelgewicht γ_{ν} gleich Null, also das Signal ZERO = 1, so wird festgestellt, ob der Rückwärtszähler RZ(KIF) bereits auf Null heruntergezahlt ist, also das Signal RZOMF = 0 ist. Ist dies nicht der Fall, so wird der Rückwärts zähler über das Signal CNTRZ um Eins dekrementiert und mit Hilfe des Signals RGV = 1 der Inferenzeinheit INF angezeigt, daß eine weitere Inferenzbildung erforderlich ist. Für den Fall, daß das Signal RZOMF = 1 ist, also der Rückwärtszähler vollständig auf Null dekrementiert ist, erfolgt eine Abfrage, ob irgendeine Zugehörigkeitsfunktion getroffen ist. Ist dies nicht der Fall, so wird das Signal SETIOR für das Mikrocontroller-Interface MIF gleich Eins und die Defuzzifikationsschaltung DFF mit Hilfe des Signals RESDFF = 1 rückgesetzt. Erfolgte ein Treffer, ist das Bit NH also nicht Eins, so wird das Auswahlsignal FA1 abgefragt, ob eine Defuzzifikation nach einem Maxiumverfahren LM/FM oder nach einem der Schwerpunktsverfahren COG1/COG2 erfolgt. Ist das Auswahlsignal FA1 gleich Null, so wird die Adresse des jeweiligen Höhenwertes H_{rz} aus der Startadresse des dritten Wissensbasisdeskriptorwortes KBD3 und der zwischengespeicherten Rückwartszahlerstellung gebildet, wobei die Zwischenspeicherung durch das aus der erfindungsgemäßen Defuzzifikationseinheit stammenden Aktivierungssignal ENGARZ erfolgt, sobald ein maximales aggregiertes Regelgewicht vorliegt. Der so adressierte Höhenwert H_{rz} wird in das Mikrocontroller-Interface MIF übernommen, die Signale SETIOR und SETOV für das Mikrocontroller-Interface gleich Eins gesetzt und die Defuzzifikationseinheit durch das Signal RESDFF = 1 rückgesetzt. Wenn das jeweilige Regelgewicht ungleich Null ist, also das Signal ZERO = 0 ist, so wird, sofern das Auswahlsignal FA1 = 1 ist, auf eine Einsprungstelle 1 verzweigt und sonst, wegen des Addierers ADD2, einen Takt gewartet, danach die Signale ENGA und RGV gleich Eins gesetzt. Hierauf erfolgt eine Abfrage des Rückwärtszählers, falls dieser sich noch nicht auf Null befindet, wird eine Dekrementierung durch das Signal CNTRZ gleich Eins ausgelöst und es erfolgt anschließend eine weitere Inferenzbildung. Falls der Rückwärtszähler jedoch bereits auf Null steht erfolgt, wie oben erwähnt, die Adreßbildung für den Höhenwert H_{rz} und eine Übergabe des Höhenwertes an das Mikrocontroller-Interface MIF mit den oben erwähnten Steuerinformationen.

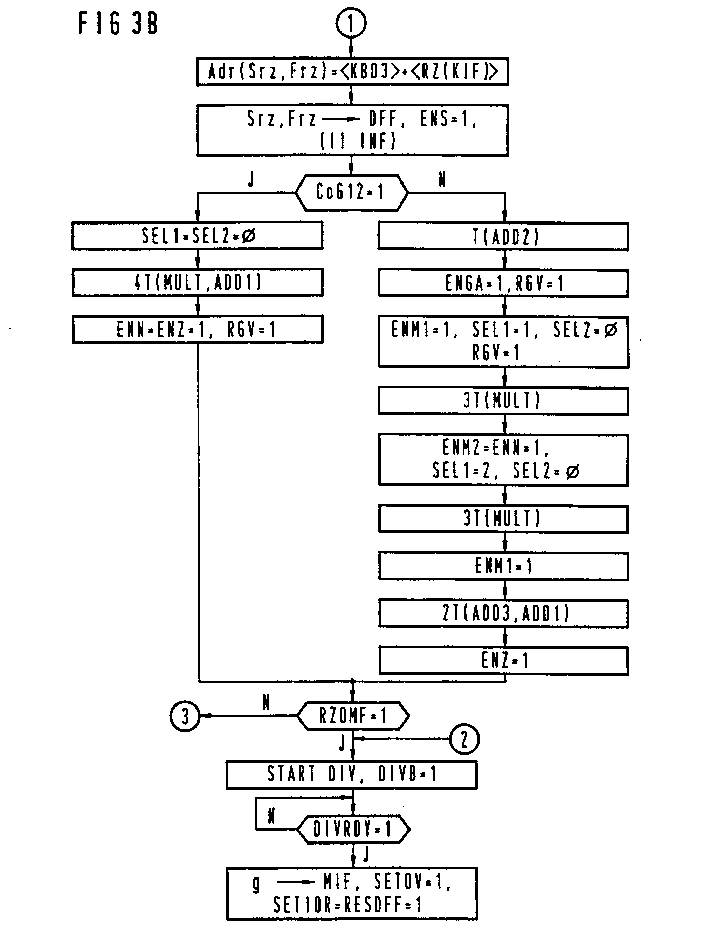

In Figur 3B ist ein zweiter Teil des Ablaufdiagramms dargestellt, das oben mit der in Figur 3A genannten Einsprungstelle 1 beginnt, die dem Zustand entspricht, daß die Inferenzbildung INF abgeschlossen ist, das jeweilige aggregierte Regelgewicht nicht Null ist und eine Defuzzifikation nach einem Schwerpunktsverfahren erfolgen soll. Sind diese Bedingungen erfüllt, so werden die jeweiligen Adressen Adr(S_{rz}, F_{rz}) aus der Startadresse KBD3 und den jeweiligen Stand des Rückwärtszählers RZ(KIF) gebildet und auf diese Weise die Schwerpunkte S_{rz} und Flachenmaßzahlen F_{rz} der erfindungsgemäßen Defuzzifikations-Vorrichtung DFF zugeführt und das Aktivierungssignal ENS =1 gesetzt. Parallel zu diesem Vorgang erfolgt die Inferenzbildung. Das Auswahlsignal COG12, das wie bereits erwähnt aus den Flachenmaßzahlen gebildet wird, wird nunmehr abgefragt, ob ein vereinfachtes Schwerpunktverfahren COG1 auf der Basis der aggregierten Regelgewichte und der Schwerpunkte oder ein ausführliches Schwerpunktsverfahren COG2 auf der Basis der aggregierten Regelgewichte, der Schwerpunkte und der Flächenmaßzahlen erfolgen soll. Für den Fall, daß das Signal COG12 gleich Eins ist, also ein vereinfachtes Schwerpunktsverfahren COG1 zur Anwendung kommt, werden die Auswahlsignale SEL1 und SEL2 zur Ansteuerung der Eingangsmultiplexer MUX1 und MUX2 in der Defuzzifikations-Vorrichtung gleich Null gesetzt, wegen des Multiplizierers MULT und des Addierers ADD1 vier Takte gewartet und dann die Aktivierungssignale ENN und ENZ = 1 und das'Signal RGV = 1 gesetzt. Im Falle des ausführlichen Schwerpunktsverfahrens wird lediglich das Auswahlsignal SEL1 = 0 und das Auswahlsignal SEL2 = 1 gesetzt und nur drei Takte wegen des Multiplizierers MULT gewartet. Daraufhin wird das Aktivierungssignal ENM1, das Auswahlsignal SEL1 und das Steuersingal RGV gleich Eins und das Auswahlsignal SEL2 gleich Null gesetzt und anschließend wegen des Multiplizierers MULT drei Takte gewartet. Daraufhin werden die Aktivierungssignale ENM2 und ENN gleich Eins gesetzt und das Auswahlsignal SEL1 = 2 und das Auswahlsignal SEL2 = 0 gesetzt. Anschließend wiederum drei Takte wegen des Multiplizierers MULT gewartet und anschließend das Aktivierungssignal ENM1 = 1 gesetzt. Schließlich wird ebenfalls zwei Takte wegen der Addierer ADD3 und ADD1 gewartet und das Aktivierungssignal ENZ = 1 gesetzt. Bei beiden Schwerpunktsverfahren ist nunmehr der Nenner und der Zähler berechnet und es erfolgt eine Verzweigung zur Einsprungstelle 3 in Figur 3A, sofern der Rückwärtszähler noch nicht bis auf Null heruntergezahlt ist, was bedeutet, daß der Rückwärtszähler durch das Signal CNTRZ = 1 dekrementiert wird und eine weitere Inferenzbildung bzw. die nachfolgenden Schritte erfolgen. Ist der Rückwärtszähler bis auf Null heruntergezählt, also das Signal RZOMF = 1, so wird die Division gestartet, sobald vom Steuertakt CRTL durch das Signal DIVB = 1 eine Division angestoßen wird. Die Division erfolgt solange bis ihr Ende durch das Signal DIVRDY = 1 der Steuereinheit CRTL mitgeteilt wird. Ist dies der Fall, so wird der scharfe Ausgangswert g in das Mikrocontroller-Interface MIF übernommen, durch das Signal SETOV = 1 angezeigt, daß ein gültiger charfer Ausgangswert vorliegt. Darüber hinaus wird das Signal SETIOR = 1 gesetzt und die Defuzzifikations-Vorrichtung DFF mit Hilfe des Signals RESDFF = 1 rückgesetzt.

Das Starten des Dividierers DIV und die folgenden Schritte erfolgen auch dann, wenn gleichzeitig das jeweilige aggregierte Regelgewicht gleich Null, der Rückwärtszähler vollständig auf Null heruntergezahlt ist, mindestens eine Zugehörigkeitsfunktion getroffen ist, also das Signal NH =0 ist, und eine Defuzzifikation nach einem der Schwerpunktsverfahren COG1 oder COG2 erfolgt.

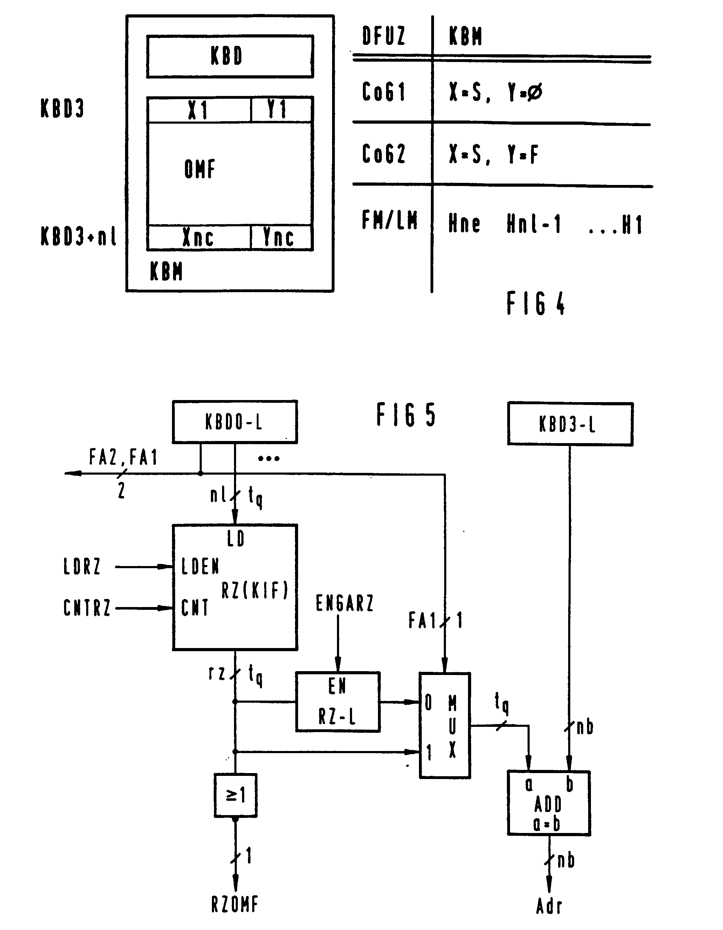

Figur 4 zeigt den Wissensbasisspeicher KBM mit einem Wissensbasisdeskriptorblock KBD und einem Ausgangszugehörigkeitsfunktionsblock OMF, wobei die Startadresse des Ausgangszugehörigkeitsfunktionsblocks OMF durch das Wissensbasisdeskriptorwort KBD3 beschrieben ist. Für nl Zugehörigkeitsfunktionen sind ab der Startadresse nl Zellen abgelegt,wobei eine Zelle aus einem X und einem Y-Teil besteht und die letzte Zelle die Adresse KBD3 + nl besitzt. Wird für das Defuzzifikationsverfahren das vereinfachte Schwerpunktsverfahren gewählt, so besteht der X-Teil der adressierten Zelle aus dem jeweiligen Schwerpunktskoordinatenwert und der Y-Teil ist mit Nullen belegt. Beim ausführlicheren Schwerpunktsverfahren COG2 ist der Y-Teil der adressierten Zelle hingegen mit der zugehörigen Flächenmaßzahl belegt. Für beide möglichen Maximumverfahren FM/LM (first maximum/last maximum) ist der X-Teil der adressierten Zelle mit einem Höhenwert und der Y-Teil mit Nullen belegt, wobei die Höhenwerte der Größe nach derart geordnet sind, daß in der durch die Startadresse adressierten Zelle der kleinste Höhenwert und in der durch die Adresse KBD3 + nl adressierten Zelle der größte Höhenwert gespeichert ist.

Figur 5 ist ein wesentlicher Teil des Wissensbasisspeicher-Interface KIF mit dem Rückwärtszähler RZ(KIF), einer Rückwärtszähler-Haltestufe RZ-L, einem Multiplexer MUX, einem Addierer ADD, einer Haltestufe KBD0-L für das nullte Wissensbasisdeskriptorwort, einer Haltestufe KBD3-L für das dritte Wissensbasisdeskriptorwort, also für die Startadresse, und eine NOR-Schaltung NOR. Aus der Halte stufe KBD0-L ist die Anzahl nl der Ausgangszugehörigkeitsfunktionen in den Rückwärtszähler RZ(KIF) ladbar, sobald das Ladesignal LDRZ aus der Steuereinheit CTRL dies gestattet. Der Rückwärtszähler RZ(KIF) ist durch das Signal CNTRZ dekrementierbar und die Signale der Bitleitungen am Ausgang des Rückwärtszählers sind durch die NOR-Schaltung NOR zum Signal RZOMF verknüpft, das der Steuereinheit CTRL meldet, wenn der Rückwärtszähler vollständig auf Null rückgezählt ist. Der Ausgang des Rückwärtszählers ist sowohl direkt mit einem Eins-Eingang des Multiplexers MUX und über das Halteglied RZ-L mit einem Nulleingang des Multiplexers MUX verbunden, dessen Auswahleingang durch das Signal FA1 aus dem nullten Wissensbasisdeskriptorwort angesteuert wird. Das Halteglied RZ-L besitzt einen Aktivierungseingang EN, der mit dem in der erfindungsgemäßen Defuzzifikations-Vorrichtung DFF erzeugten Maximierungssignal ENGARZ versorgt ist und auf diese Weise stellvertretend für eine zugehörigkeitsfunktion eine Relativadresse des zur jeweiligen zugehörigkeitsfunktion gehörenden Höhenwertes zwischengespeichert wird. Zur jeweiligen Relativadresse am Ausgang des Multiplexers MUX wird im Addierer ADD die Startadresse aus dem Halteglied KBD3-L hinzuaddiert und die Adresse Adr zur Adressierung des Wissensbasisspeichers KBM gebildet.

## Patentansprüche

1. Defuzzifikations-Vorrichtung für einen Fuzzy-Logic-Controller, der Zugehörigkeitsfunktionen in Form von Maßzahlen (F, S oder H) verarbeitet ,
- bei der abhängig von Auswahlsignalen (FA1, FA2) und aggregierten Regelgewichten (γ_{ν}), entweder in einem Maximum-Verfahren (FM/LM) ein erster Höhenwert (FM) der zu defuzzifizierenden unscharfen Vereinigungsmenge, bei dem ein zugehöriges aggregiertes Regelgewicht maximal ist, oder ein letzter Höhenwert (LM) der zu defuzzifizierenden unscharfen Vereinigungsmenge, bei dem ein zugehöriges Regelgewicht maximal ist, als scharfer Ausgangswert (g) ausgewählt ist und ein entsprechendes Aktivierungssignal (ENGARZ) für ein Wissensbasisspeicher-Interface (KIF) gebildet ist oder alternativ abhängig von Auswahlsignalen (FA1, FA2) entweder in einem ersten Schwerpunktsverfahren (COG1) aus Schwerpunktskoordinaten (S_{ν}) und aggregierten Regelgewichten (γ_{ν}) von Zugehörigkeitsfunktionen oder in einem zweiten Schwerpunktsverfahren (COG2) aus Schwerpunktskoordinaten (S_{ν}), Flachenmaßzahlen (F_{ν}) und aggregierten Regelgewichten (γ_{ν}) ein scharfer Ausgangswert (g) gebildet wird,
- bei der ein erster Addierer (ADD1) mit nachgeschaltetem Zähler-Register (Z-Reg), ein zweiter Addierer (ADD2) mit nachgeschaltetem Nenner-Register (N-Reg), ein Multiplizierer (MULT) und ein Dividierer (DIV) gemeinsam für das erste und das zweite Schwerpunktsverfahren vorgesehen sind und
- bei der der zweite Addierer (ADD2) zur Bildung des Aktivierungssignals (ENGARZ) dient, sofern eine Defuzzifikation nach dem Maximum-Verfahren erfolgt.

2. Defuzzifikations-Vorrichtung nach Anspruch 1,
- bei der die aggregierten Regelgewichte (γ_{ν}), abhängig vom ersten Auswahlsignal (FA1), einem Eingang (b) des zweiten Addierers (ADD2), dessen Ausgang mit einem Eingang eines ersten Multiplexers (MUX5) verbunden ist, und einem Eingang einer Invertiereinheit (I1), deren Ausgang mit einem weiteren Eingang des ersten Multiplexers verbunden ist, zugeführt sind, wobei der Ausgang des ersten Multiplexers (MUX5) mit dem Eingang des ihm nachgeschalteten Nenner-Registers beschaltet ist, dessen Ausgang auf einen weiteren Eingang (a) des zweiten Addierers rückgeführt ist,
- bei der einem Übertragseingang (CI) des zweiten Addierers (ADD2) in invertierter Form und einem Auswahleingang des ersten Multiplexers (MUX5) in nichtinvertierter Form eines der Auswahlsignale (FA1) zugeführt ist,
- bei der die Anzahl der niedrigwertigsten Bits (LSB), die der Wortbreite der aggregierten Regelgewichte entspricht, in einer ersten ODER-Schaltung (OR3) bitweise mit dem zweiten Auswahlsignal (FA2) verknüpft sind und der Ausgang der ersten ODER-Schaltung mit einem ersten Eingang einer UND-Schaltung (A1) verbunden ist, deren zweiter Eingang mit einem Übertragsausgang (CO) des zweiten Addierers (ADD2) verbunden ist, deren dritter Eingang mit einem Aktivierungssignal (ENGA) beaufschlagt ist und deren Ausgang das Aktivierungssignal (ENGARZ) für das Wissensbasisspeicher-Interface (KIF) liefert, und
- bei der eine zweite ODER-Schaltung (OR5) vorgesehen ist, deren erster Eingang mit dem Aktivierungssignal (ENGARZ) für das Wissensbasisspeicher-Interface (KIF), deren zweiter Eingang mit einem weiteren Aktivierungssignal (ENN) und deren Ausgang mit einem Aktivierungseingang (EN) des Nenner-Registers beschaltet ist.

3. Defuzzifikations-Vorrichtung nach Anspruch 1 oder 2,
- bei der über einen ersten Multiplexer (MUX1) alternativ aggregierte Regelgewichte (γ_{ν}) aus einer Inferenzeinheit (INF) oder Zwischenergebnisse aus einem Auffangregister (M1) einem Eingang (a) eines Multiplizierers ( MULT) zugeführt und
- bei der über einen zweiten Multiplexer (MUX2) einem weiteren Eingang (b) des Multiplizierers (MULT) alternativ die Flächenmaßzahlen oder Schwerpunktskoordinaten zugeführt sind.

4. Defuzzifikations-Vorrichtung nach einem der vorhergehenden Ansprüche,
bei der ein Signal zur Unterscheidung einer Defuzzifikation nach dem ersten oder zweiten Schwerpunktsverfahren dadurch erfolgt, daß beim ersten Schwerpunktsverfahren alle Flachenmaßzahlen mit Null kodiert sind und daß ein entsprechendes Unterscheidungssignal (COG12) durch eine NOR-Verknüpfung (NOR2) der Bits der jeweiligen Flächenmaßzahl (F_{ν}) gebildet ist.

## Claims

1. Defuzzification device for a fuzzy logic controller which processes membership functions in the form of measurement figures (F, S or H),
- in which, depending on selection signals (FA1, FA2) and aggregated regulation weights (γ_{ν}), either in a maximum process (FM/LM) a first maximum value (FM) of the fuzzy unification set to be defuzzified, at which an associated aggregated regulation weight is a maximum, or a last maximum value (LM) of the fuzzy unification set to be defuzzified, at which an associated regulation weight is a maximum, is selected as the sharp output value (g) and a corresponding activation signal (ENGARZ) for a knowledge base memory interface (KIF) is formed or, alternatively, depending on selection signals (FA1, FA2), a sharp output value (g) is formed either in a first centre of gravity process (COG1), from centre of gravity coordinates (S_{ν}) and aggregated regulation weights (γ_{ν}) of membership functions or in a second centre of gravity process (COG2) from centre of gravity coordinates (S_{ν} ), area measurement figures (F_{ν}) and aggregated regulation weights (γ_{ν}),
- in which a first adder (ADD1) with downstream counter register (Z-Reg), a second adder (ADD2) with downstream denominator register (N-Reg), a multiplier (MULT) and a divider (DIV) are provided jointly for the first and second centre of gravity process and
- in which the second adder (ADD2) is used to form the activation signal (ENGARZ) if defuzzification is being carried out according to the maximum process.

2. Defuzzification device according to Claim 1,
- in which the aggregated regulation weights (γ_{ν}), depending on the first selection signal (FA1), are fed to an input (b) of the second adder (ADD2), whose output is connected to an input of a first multiplexer (MUX5), and are fed to an input of an inverter unit (I1) whose output is connected to a further input of the first multiplexer, the output of the first multiplexer (MUX5) being wired to the input of the denominator register downstream thereof, whose output is fed back to a further input (a) of the second adder,
- in which one of the selection signals (FA1) is fed to a carry input (CI) of the second adder (ADD2) in inverted form and to a selection input of the first multiplexer (MUX5) in non-inverted form,
- in which the number of least significant bits (LSB), which corresponds to the word width of the aggregated regulation weights, are logically linked bit by bit in a first OR circuit (OR3) with the second selection signal (FA2), and the output of the first OR circuit is connected to a first input of an AND circuit (Al), whose second input is connected to a carry output (CO) of the second adder (ADD2), whose third input has an activation signal (ENGA) applied to it and whose output supplies the activation signal (ENGARZ) for the knowledge base memory interface (KIF), and
- in which a second OR circuit (OR5) is provided, whose first input is wired to the activation signal (ENGARZ) for the knowledge base memory interface (KIF), whose second input is wired to a further activation signal (ENN), and whose output is wired to an activation input (EN) of the denominator register.

3. Defuzzification device according to Claim 1 or 2,
- in which, via a first multiplexer (MUX1), aggregated regulation weights (γ_{ν}) from an inference unit (INF) or intermediate results from an interception register (M1) are alternatively fed to an input (a) of a multiplier (MULT) and
- in which, via a second multiplexer (MUX2), the area measurement figures or centre of gravity coordinates are alternatively fed to a further input (b) of the multiplier (MULT).

4. Defuzzification device according to one of the preceding claims,
in which a signal for discriminating between a defuzzification according to the first or second centre of gravity process is carried out in that all the area measurement figures are encoded with zero in the case of the first centre of gravity process and by a corresponding discrimination signal (COG12) being formed by means of a NOR operation (NOR2) on the bits of the respective area measurement figure (F_{ν}).

## Revendications

1. Filtre anti-flou pour unité de commande à logique flou qui traite des fonctions d'appartenance sous la forme de dimensions (F, S ou H),
- dans lequel on sélectionne comme valeur de départ nette (g), en fonction de signaux de sélection (FA1, FA2) et de poids de régulation agrégés (γν), soit dans une première procédure à maxima (FM/LM) une première valeur de hauteur (FM) de la quantité d'union non nette dont le flou doit être supprimé, pour laquelle un poids de régulation agrégé correspondant atteint sa valeur maximale soit une dernière valeur de hauteur (LM) de la quantité d'union non nette dont le flou doit être supprimé, pour laquelle un poids de régulation agrégé correspondant atteint sa valeur maximale; et on constitue un signal d'activation correspondant (ENGARZ) pour une interface de mémoire de base de connaissances (KIF), ou alternativement, on constitue une valeur de départ nette (9) en fonction de signaux de sélection (FA1, FA2) soit dans une première procédure à centre de gravité (COG1) à partir de coordonnées de centre de gravité (Sv) et de poids de régulation agrégés (γν) de fonctions d'appartenance soit dans une seconde procédure à centre de gravité (COG2), à partir de coordonnées de centre de gravité (Sν), de dimensions de surface (Fν) et de poids de régulation agrégés (γν).
- dans lequel un premier additionneur (ADD1) doté d'un registre de compteur installé en aval (Z-Reg), un deuxième additionneur (ADD2) doté d'un registre de dénominateur installé en aval (N-Reg), un multiplicateur (MULT) et un diviseur (DIV) sont prévus en commun pour la première et la seconde procédures à centre de gravité, et
- dans lequel le deuxième additionneur (ADD2) sert à la formation du signal d'activation (ENGARZ) si un filtrage anti-flou s'effectue selon la procédure à maxima.

2. Filtre anti-flou selon la revendication 1,
- dans lequel les poids de régulation agrégés (γν) sont fournis, en fonction du premier signal de sélection (FA1), à une entrée (b) du deuxième additionneur (ADD2) dont la sortie est reliée à une entrée d'un premier multiplexeur (MUX5), et à une entrée d'une unité d'inversion (11) dont la sortie est reliée à une deuxième entrée du premier multiplexeur, la sortie du premier multiplexeur (MUX5) étant raccordée à l'entrée du registre de dénominateur installé en aval, dont la sortie est ramenée vers une autre entrée (a) du deuxième additionneur.
- dans lequel l'un des signaux de sélection (FA1) est fourni sous une forme inversée à une entrée de transmission (CI) du deuxième aditionneur (ADD2), et sous une forme non inversée à une entrée de sélection du premier multiplexeur (MUX5).
- dans lequel le nombre des bits les moins significatifs (LSB) qui correspond à la longueur de mot des poids de régulation agrégés, sont enchaînés dans un premier circuit OU (OR3) bit par bit avec le deuxième signal de sélection (FA2), et la sortie du premier circuit OU est reliée à une première entrée d'un circuit ET (A1), dont la deuxième entrée est reliée à une sortie de transmission (CO) du deuxième additionneur (ADD2), dont la troisième entrée est alimentée par un signal d'activation (ENGA) et dont la sortie fournit le signal d'activation (ENGARZ) pour l'interface de mémoire de base de connaissances (KIF), et
- dans lequel un deuxième circuit OU (OR5) est prévu, dont la première entrée est raccordée au signal d'activation (ENGARZ) pour l'interface de mémoire de base de connaissances (KIF), la deuxième entrée à un deuxième signal d'activation (ENN), et dont la sortie est raccordée à une entrée d'activation (EN) du registre de dénominateur.

3. Filtre anti-flou selon la revendication 1 ou 2,
- dans lequel on fournit alternativement par un premier multiplexeur (MUXI) des poids de régulation agrégés (γν) provenant d'un générateur d'inférences (INF) ou des résultats intermédiaires provenant d'un registre de captage (M1) à une entrée (a) d'un multiplexeur (MULT), et
- dans lequel les dimensions de surface ou les coordonnées de centre de gravité sont fournies alternativement à une autre entrée (b) du multiplexeur (MULT) par l'intermédiaire d'un deuxième multiplexeur (MUX2).

4. Filtre anti-flou selon l'une des revendications précédentes,
dans lequel un signal est généré pour la différenciation d'un filtrage du flou selon la première ou la seconde procédure à centre de gravité, par le fait que dans la première procédure à centre de gravité, toutes les dimensions de surface sont codées par zéro, et qu'un signal de différenciation correspondant (COG12) est formé par un enchaînement NON-OU (NOR2) des bits de la dimension de surface respective (Fν).
